Europäisches Patentamt

European Patent Office

Office européen des brevets

(11) Veröffentlichungsnummer: **0 014 302**
A1

(12) # EUROPÄISCHE PATENTANMELDUNG

(21) Anmeldenummer: 80100005.0

(22) Anmeldetag: 02.01.80

(51) Int. Cl.³: **C 01 G 49/08**
**H 01 F 1/11**

(30) Priorität: 03.02.79 DE 2904085

(43) Veröffentlichungstag der Anmeldung:
20.08.80 Patentblatt 80/17

(84) Benannte Vertragsstaaten:
DE FR GB NL

(71) Anmelder: BASF Aktiengesellschaft
Carl-Bosch-Strasse 38
D-6700 Ludwigshafen(DE)

(72) Erfinder: Ohlinger, Manfred, Dr.
Anselm-Feuerbach-Strasse 13
D-6710 Frankenthal(DE)

(72) Erfinder: Reichert, Hans, Dr.
Weidenstrasse 2 A
D-6710 Frankenthal 5(DE)

(72) Erfinder: Vaeth, Guenter
Woogstrasse 35
D-6703 Limburgerhof(DE)

(72) Erfinder: Faulhaber, Friedrich Richard, Dr.
Ostpreussenstrasse 3
D-6704 Mutterstadt(DE)

(72) Erfinder: Werther, Joachim, Dr.
An der Tuchbleiche 2
D-6712 Bobenheim-Roxheim 2(DE)

(72) Erfinder: Autzen, Horst, Dr.
Hinter den Ruestern 20
D-6713 Freinsheim(DE)

(72) Erfinder: Rudolf, Peter, Dr.
Wiesenstrasse 11
D-6701 Neuhofen(DE)

(54) Verfahren zur Herstellung von hochkoerzitivem nadelförmigem Gamma-Eisen(III)oxid.

(57) Die Erfindung betrifft ein Verfahren zur Herstellung von hochkoerzitivem nadelförmigem Gamma-Eisen (III) oxid durch Reducktion von nadelförmigen unmagnetischen Eisen (III)-oxiden oder -oxidhydroxiden bei Temperaturen zwischen 250 und 700°C mit einem überhitzten Dampfgemisch aus einer in diesem Temperaturbereich in Gegenwart von Eisenoxiden zersetzlichen organischen Verbindung und einem Inertgas zum Magnetit und anschließender Oxidation des Magnetits mit sauerstoffhaltigen Gasen bei 150 bis 450°C zum Gamma-Eisen (III) oxid.

EP 0 014 302 A1

Croydon Printing Company Ltd.

BASF Aktiengesellschaft                    O.Z. 0050/033650

Verfahren zur Herstellung von hochkoerzitivem nadelförmigem
Gamma-Eisen(III)oxid

Die Erfindung betrifft ein Verfahren zur Herstellung von
hochkoerzitivem nadelförmigem Gamma-Eisen(III)oxid
durch Reduktion von nadelförmigen unmagnetischen Eisen(III)-
oxiden oder -oxidhydroxiden bei Temperaturen zwischen 250
und 700°C mit einem überhitzten Dampfgemisch aus einer
in diesem Temperaturbereich in Gegenwart von Eisenoxiden
zersetzlichen organischen Verbindung und einem Inertgas
zum Magnetit und anschließender Oxidation des Magnetits
mit sauerstoffhaltigen Gasen bei 150 bis 450°C zum
Gamma-Eisen(III)oxid.

Nadelförmige ferrimagnetische Eisenoxide, wie Magnetit
und Gamma-Eisen(III)oxid, werden seit langem in großem
Umfang als magnetisierbares Material bei der Herstellung
von magnetischen Aufzeichnungsträgern eingesetzt. Zur
Herstellung des vor allem verwendeten Gamma-Eisen(III)oxids
sind bereits eine Vielzahl von Verfahren bekannt geworden.
So beschreibt bereits die GB-PS 675 260 ein Verfahren zur
Gewinnung von Gamma-Eisen(III)oxid, bei welchem nadelförmiges $\alpha$-Eisenoxidhydroxid (Goethit) zum $\alpha$-Eisen(III)-
oxid entwässert, in reduzierender Atmosphäre bei mehr als
300°C zum Magnetit umgewandelt und an Luft bei Temperaturen
unterhalb 450°C zum nadelförmigen Gamma-Eisen(III)oxid
oxidiert wird. Sowohl bei der Entwässerung der Eisenoxidhydroxide wie auch der nachfolgenden Reduktion zum Magnetit sind Temperaturen von mehr als 300°C erforderlich,
welche ein unerwünschtes Sintern der Nadeln zu gröberen
Teilchen bewirken. Dies macht sich in einem Abfall der
Koerzitivfeldstärke und damit bei den elektroakustischen
Eigenschaften nachteilig bemerkbar.

Sob/BL

Nach einer anderen erstmals in der DE-PS 801 352 offenbarten Verfahrensweise werden die unmagnetischen Eisenoxide durch Behandeln mit Salzen kurzkettiger Carbonsäuren und anschließendem Erhitzen in Magnetit überführt, der daraufhin bei 200 bis 400°C zum Gamma-Eisen(III)oxid oxidiert wird. Durch die US-PS 2 900 236 ist dann bekannt geworden, daß sämtliche organische Verbindungen, welche bei Temperaturen unterhalb 540°C unter geringer Teer- und Aschebildung zersetzlich sind, sich für die Reduktion der unmagnetischen Eisenoxide zum Magnetit eignen. Dazu wird das Eisenoxid mit der gasförmigen, festen oder flüssigen organischen Substanz in Kontakt gebracht und auf eine Temperatur von 540 bis 650°C erhitzt. Während die US-PS 2 900 236 alle entsprechenden organischen Substanzen unter besonderer Nennung von Wachs, Stärke und Öl hierfür als brauchbar angibt, werden in der DE-AS 12 03 656 auf das Eisenoxid aufgefällte Salze löslicher Seifen, in der DE-OS 20 64 804 sowohl höhere Kohlenwasserstoffe, höhere Alkohole und Amine, höhere Fettsäuren und deren Salze, sowie Öle, Fette und Wachse, in der DL-PS 91 017 ebenfalls langkettige Carbonsäuren bzw. deren Salze, in der DE-AS 17 71 327 aliphatische Monocarbonsäuren mit 8 bis 25 Kohlenstoffatomen gegebenenfalls in Mischung mit Morpholin und in der JA-OS 80 499/1975 bei Raumtemperatur flüssige organische Verbindungen mit niedrigem Siedepunkt, wie z.B. Äthanol, enthaltende Inertgase als Reduktionsmittel für die Gewinnung von Magnetit aus unmagnetischen Eisenoxiden angeführt. In den genannten vorbekannten Verfahren wird teils unter Luftausschluß erhitzt, wobei die Reaktion auf der Stufe des Magnetits stehenbleibt, oder auch in Gegenwart von Luft, wodurch der Magnetit sofort zum Gamma-Eisen(III)oxid oxidiert wird.

0014302

Diese Verfahren konnten jedoch nicht voll befriedigen. Werden die Eisenoxide mit den flüssigen oder gelösten organischen Substanzen in Kontakt gebracht, so bilden sich hydrophile Materialien, bei denen das erforderliche Auswaschen der anorganischen Salze erschwert ist. Diese anorganischen Salze können allerdings die Bildung hochwertiger Gamma-Eisen(III)oxide beeinträchtigen. Aber auch das Mischen der trockenen Substanzen führt zu ungenügenden Ergebnissen, da eine ausreichend homogene Mischung der im Verhältnis zum Eisenoxid geringen Mengen an organischer Substanz mit dem stark agglomerierten Eisenoxid nur schwer zu erreichen ist. Daraus resultieren uneinheitliche Endprodukte. Wird demgegenüber die Reduktion der unmagnetischen Eisen(III)oxide zum Magnetit in der bereits vorgeschlagenen Weise mittels bei Raumtemperatur flüssiger organischer Verbindungen mit niedrigem Siedepunkt, welche dampfförmig oder in Mischung mit Inertgasen eingesetzt werden, durchgeführt, so treten bei den gegebenen Reduktionstemperaturen von 300°C und mehr ebenfalls die schon bei der Verwendung der üblichen reduzierenden Gase, wie Wasserstoff oder Kohlenmonoxid, bekannten und unerwünschten Sinterungen der feinteiligen Materialien auf, welche die magnetischen Eigenschaften ungünstig beeinflussen.

Der Erfindung lag somit die Aufgabe zugrunde, ein Verfahren bereitzustellen, mit welchem die im Rahmen der Herstellung von nadelförmigem Gamma-Eisen(III)oxid auftretenden Sinterprozesse zu vermeiden sind und welches ein reines Gamma-Eisen(III)oxid hoher Koerzitivfeldstärke ergibt.

Es wurde nun überraschenderweise gefunden, daß sich nadelförmige Gamma-Eisen(III)oxide mit hohen Werten für die Koerzitivfeldstärke durch Reduktion von nadelförmigen unmagnetischen Eisen(III)oxiden oder -oxidhydroxiden bei Temperaturen zwischen 250 und 700°C mit einem überhitzten Dampfgemisch aus einer in diesem Temperaturbereich in Gegenwart von Eisenoxiden zersetzlichen organischen Verbindung und einem Inertgas zum Magnetit und anschließender Oxidation des Magnetits mit sauerstoffhaltigen Gasen bei 150 bis 450°C herstellen lassen, wenn die eingesetzte organische Verbindung einen Fließpunkt von mindestens 250°C, eine Oberflächenspannung zwischen 27 und 30 dyn/cm, gemessen bei 90°C, und eine Dielektrizitätskonstante von 2,2 bis 2,6 aufweist.

Die für das erfindungsgemäße Verfahren geeigneten organischen Verbindungen, wie z.B. Stearinsäure, Ölsäure, Sojalecithin und Palmitinsäure, sowie Gemische davon werden in einem geschlossenen Gefäß auf Temperaturen von größer 250°C, vorzugsweise 300°C erhitzt und Inertgas, im allgemeinen Stickstoff hindurchgeleitet. Über geheizte Zuleitungen wird dieses Dampfgemisch dann dem Reaktionsofen zur Reduktion der Eisenoxide zum Magnetit zugeführt. Die für das Verfahren verwendbaren nadelförmigen unmagnetischen Eisenoxide bzw. -oxidhydroxide sind zweckmäßigerweise $\alpha$-Eisen(III)oxid, Goethit oder Lepidokrokit, sowie gemeinsame Ausfällungen der beiden Letztgenannten. Das für das erfindungsgemäße Verfahren eingesetzte Dampfgemisch enthält vorteilhafterweise auf ein Volumenteil der organischen Verbindung $10^2$ bis $10^4$ Volumenteile Inertgas.

Zur Durchführung des Verfahrens lassen sich die an sich bekannten Einrichtungen zur Herstellung von Gamma-Eisen(III)oxid benutzen. So wird üblicherweise sowohl die Reduktion der genannten nadelförmigen unmagnetischen Eisenoxide zum Magnetit als auch die sich anschließende Oxidation des Magnetits zum Gamma-Eisen(III)oxid in kontinuierlichen oder diskontinuierlichen Drehrohren vorgenommen. Die erfindungsgemäße Einleitung des Dampfgemi-

sches aus organischer Verbindung und Inertgas geschieht innerhalb der Reaktionszeit in solchen Mengen, daß 0,5 bis 15, vorzugsweise 2 bis 10 Gewichtsteile organische Verbindung, bezogen auf die Menge an Eisenoxid, vorhanden sind. Die Reduktionstemperatur liegt zwischen 250 und 700, vorzugsweise 300 bis 620°C und die mittlere Verweilzeit des Eisenoxids beträgt 20 bis 150, vorzugsweise 30 bis 60 Minuten. Der hierbei entstehende Magnetit wird dann in bekannter Weise bei 150 bis 450, vorzugsweise 200 bis 280°C mit sauerstoffhaltigen Gasen zum Gamma-Eisen(III)-oxid umgewandelt.

Das nach dem erfindungsgemäßen Verfahren erhältliche Gamma-Eisen(III)oxid zeichnet sich durch einen im Vergleich zu den eingesetzten Eisenoxiden guten Erhalt der Nadelform und vor allem durch eine hohe Koerzitivfeldstärke aus, welche Werte erreicht, die bei herkömmlicher Herstellung nur durch den Zusatz von Kobalt zu erhalten sind.

Diese erfindungsgemäß hergestellten Gamma-Eisen(III)oxide eignen sich deshalb in besonderer Weise zur Herstellung von magnetischen Aufzeichnungsträgern. Hierzu wird das magnetische Material in Lösungen polymerer Bindemittel dispergiert.

Als Bindemittel eignen sich die für diesen Zweck bekannten Verbindungen, wie Polyamide, Polyurethane, bzw. Mischungen von Polyisocyanaten und höher molekularen Polyhydroxylverbindungen und insbesondere Vinylchlorid-Polymerisate mit überwiegenden Mengen an Vinylchlorid-Copolymerisate mit Comonomeren, wie Vinylester von Monocarbonsäuren, Estern von aliphatischen Alkoholen und ungesättigten Carbonsäuren, wie Acrylsäure, Methacrylsäure oder Maleinsäure, oder diesen Carbonsäuren selbst, sowie hydroxylgruppenhaltige Vinylchlorid-Copolymerisate oder Acetate allein oder in

Abmischungen. Die Magnetschicht kann zusätzlich noch vernetzt werden. Zur Dispergierung der magnetischen Materialien in der Bindemittellösung werden zweckmäßigerweise übliche Dispergiermittel wie beispielsweise Salze von Fettsäuren, Sojalecithin oder sonstige geeignete Stoffe in Mengen von 0,5 bis 6 Gewichtsprozent, bezogen auf die Einwaage des magnetischen Materials, zugegeben. Außerdem sind Zusätze wie Ester, Carbonsäuren oder Siliconöle in Mengen von 0,5 bis 10 Gewichtsprozent zur Verringerung des Reibungskoeffizienten der Magnetschicht üblich. Als weitere Zusatzstoffe können den Dispersionen auch Füllstoffe, wie Ruß, Graphit und/oder nicht magnetisierbare Pulver auf Silikatbasis in bekannter Weise zugesetzt werden. Nach dem Dispergieren erfolgt das Aufbringen der Dispersion mit bekannten Beschichtungseinrichtungen auf übliche Polyäthylenterephthalatfolien, wobei ein richtendes Magnetfeld zur Erzielung einer magnetischen Vorzugsrichtung angewendet wird. Nach dem Auftragen und Trocknen der Magnetschicht kann diese mit Vorteil an der Oberfläche vergütet, bzw. geglättet und die beschichtete Folie in den zur Herstellung von Magnetogrammträgern üblichen Maschinen in die gewünschte Bandbreite geschnitten werden.

Die Erfindung sei anhand folgender Beispiele und Vergleichsversuche näher erläutert.

Die magnetischen Pulverwerte werden durch Messung einer auf ein Stopfgewicht von $D = 1,2$ g/cm$^3$ gebrachten Oxidprobe mit einem konventionellen Schwingmagnetometer bei 100 kA/m Meßfeldstärke bestimmt. Die Koerzitivfeldstärke ($H_c$) wird in [kA/m], die spezifische Remanenz ($M_r/\rho$) und die spezifische Magnetisierung ($M_m/\rho$) werden in [nT.m$^3$/g] angegeben. Ebenfalls mit einem Schwingmagnetometer werden die Magnetbandproben bei einer Feldstärke von 100 kA/m untersucht. Angegeben wird die Koerzitivfeld-

stärke $H_c$, der remanente Magnetisierung R in $[mT]$ und der Richtfaktor RF, d.h. das Verhältnis der remanenten Magnetisierung längs zur Vorzugsrichtung zu der quer dazu. Die Messung der elektroakustischen Banddaten erfolgt nach DIN 45 512, Teil II gegen das Standardbezugsband T 308 S mit einem Vormagnetisierungsstrom von +2 dB. Die Kopierdämpfung $K_d$ ist auf das Bezugsband T 308 S bezogen, welches gleich 0 dB gesetzt wird.

Beispiel 1

Darstellung des Ausgangsmaterials

500 kg eines nadelförmigen Lepidokrokits ($\gamma$-FeOOH) mit einer spezifischen Oberfläche nach BET von 31,5 $m^2$/g, einer durchschnittlichen Nadellänge von 0,5 $\mu$m bei einem Längen-Dickenverhältnis von 12 : 1 werden in einem Drehrohrofen bei einer durchschnittlichen Produkttemperatur von 420°C und Einleitung eines Stickstoffstroms von 20 $m^3$/Std., auf 300°C vorgeheizt, innerhalb einer Stunde zu $\alpha$-Fe$_2$O$_3$ entwässert. Die anschließend durchgeführte Bestimmung ergibt eine spezifische Oberfläche nach BET von 26,5 $m^2$/g. Dieses Produkt dient als Einsatzstoff für Beispiele 2 und 3, sowie für die Vergleichsversuche 1 bis 5.

Beispiel 2

Durch einen in drei Heizzonen unterteilten Drehrohrofen wird kontinuierlich, in einer Menge von 20 kg pro Stunde, das nach Beispiel 1 erhaltene Eisenoxid gefördert. Gleichzeitig wird ein Stickstoffstrom von 60 $m^3$/h durch einen Behälter, welcher mit auf 300°C aufgeheizter Stearinsäure gefüllt ist, und anschließend zusammen mit dem Eisenoxid durch den Drehrohrofen geleitet. Im Ofen wird das Eisenoxid entsprechend den drei Heizzonen auf 565, 585 und zuletzt auf 620°C Produkttemperatur erhitzt. Die durch den

0014302

Stickstoffstrom in den Drehrohrofen eingebrachte Menge an Stearinsäure beträgt 1 kg/h. Nach einer auf 45 Minuten eingestellten Verweilzeit fällt das reduzierte Produkt, d.h. der Magnetit über eine Schleuse in einen zweiten Drehrohrofen, in welchem es bei einer mittleren Verweilzeit von ebenfalls 45 Minuten bei einer Produkttemperatur von 250°C mittels eines Luftstroms zum Gamma-Eisen(III)oxid oxidiert wird. Die an dem resultierenden Produkt gemessenen Werte sind in Tabelle 1 angegeben.

Beispiel 3

Es wird wie in Beispiel 3 beschrieben verfahren, jedoch wird Sojalecithin anstelle von Stearinsäure eingesetzt. Die Meßergebnisse sind in Tabelle 1 enthalten.

Beispiel 4

Es wird wie in Beispiel 2 beschrieben verfahren, jedoch wird nicht das Eisenoxid gemäß Beispiel 1, sondern ein reiner nadelförmiger Lepidokrokit mit einer spezifischen Oberfläche nach BET von 31,5 $m^2/g$, einer mittleren Nadellänge von 0,5 $\mu$m und einem Längen-Dickenverhältnis von 12 : 1 eingesetzt. Zusätzlich wird noch die Verweilzeit in der Reduktionsphase von 45 auf 60 Minuten erhöht. Die Meßergebnisse am Endprodukt sind in Tabelle 1 aufgeführt.

Vergleichsversuch 1

Das Eisenoxid gemäß Beispiel 1 wird vor der weiteren Verarbeitung in einem üblichen Trommelmischer bei 30 Umdrehungen pro Minute eine Stunde lang mit 3 Gewichtsprozent Stearinsäure gemischt. Diese Mischung wird in der bei Beispiel 2 beschriebenen Weise zum Gamma-Eisen(III)oxid umgewandelt, wobei jedoch der Stickstoffstrom direkt, d.h.

0014302

ohne Stearinsäurebeladung dem Reduktionsofen zugeführt wird.
Die Meßergebnisse am Endprodukt sind in Tabelle 1 enthalten.

Vergleichsversuch 2

Es wird wie in Beispiel 2 beschrieben verfahren, jedoch werden zusammen mit dem Eisenoxid gemäß Bespiel 1 50 m³/h Stickstoff, welchem 10 m³/h überhitztem Äthanoldampf zugemischt werden, durch den ersten Drehrohrofen gefördert. Die Meßergebnisse am Endprodukt sind in Tabelle 1 aufgeführt.

Vergleichsversuch 3

Es wird wie in Vergleichsversuch 2 beschrieben verfahren, jedoch wird der Äthanol-Dampf durch die gleiche Menge Benzol-Dampf ersetzt. Die Meßergebnisse am Endprodukt sind in Tabelle 1 aufgeführt.

Vergleichsversuch 4

Es wird wie in Vergleichsversuch 2 beschrieben verfahren, jedoch wird der Äthanol-Dampf durch die gleiche Menge auf 300°C erhitzten Wasserstoff ersetzt. Die Meßergebnisse am Endprodukt sind in Tabelle 1 aufgeführt.

Vergleichsversuch 5

Es wird wie in Vergleichsversuch 4 beschrieben verfahren, jedoch werden 15 m²/h auf 300°C erhitzten Wasserstoffs eingesetzt. Die Meßergebnisse am Endprodukt sind in Tabelle 1 aufgeführt.

Vergleichsversuch 6

Ein nach Vergleichsversuch 1 hergestelltes Gamma-Eisen(III)-oxid mit einer Koerzitivfeldstärke von 25,0 kA/m wird mit 1,5 Gewichtsprozent Kobalt durch Auffällen einer Kobaltferritschicht gemäß der in der DE-OS 26 50 890 beschriebenen Arbeitsweise, in ein magnetisches Material mit einer Koerzitivfeldstärke von 29,0 kA/m umgewandelt. Die übrigen Meßergebnisse sind in Tabelle 1 angegeben.

Tabelle 1

|                       | Oberfläche nach BET | $H_c$ | $M_r/\rho$ | $M_m/\rho$ |
|-----------------------|---------------------|-------|------------|------------|
| Beispiel 2            | 18,9                | 29,7  | 40,2       | 75,6       |
| Beispiel 3            | 18,5                | 29,2  | 40,3       | 76,4       |
| Beispiel 4            | 23,5                | 29,0  | 40,8       | 77,8       |
| Vergleichsversuch 1   | 19,0                | 25,0  | 39,8       | 74,8       |
| Vergleichsversuch 2   | 19,3                | 24,8  | 39,9       | 75,0       |
| Vergleichsversuch 3   | 18,7                | 25,1  | 40,1       | 77,2       |
| Vergleichsversuch 4   | 18,5                | 24,8  | 40,1       | 75,5       |
| Vergleichsversuch 5   | 13,5                | 22,6  | 41,3       | 78,1       |
| Vergleichsversuch 6   | 17,5                | 29,5  | 41,1       | 79,2       |

Beispiele A bis I

Nach folgender Vorschrift werden die magnetischen Materialien gemäß den Beispielen 2 bis 4 und den Vergleichsversuchen 1 bis 6 zu Magnetbändern verarbeitet. Dazu werden in einer Stahlkugelmühle mit einem Füllvolumen von 20 000 Volumenteilen, die mit 50 Umdrehungen pro Minute betrieben wird, 20 000 Teile Stahlkugeln, 2 700 Teile des entsprechenden magnetischen Materials, 67 Teile eines

Dispergiermittels mit Betainstruktur, je 15 Teile eines Siliconöls und eines Dicarbonsäuregemisches mit 12 bis 19 C-Atomen, 400 Teile eines handelsüblichen isocyanatfreien Polyesterurethans aus Adipinsäure, Butandiol-1,4 und 4,4-Dicyanato-diphenyl-methan mit einem K-Wert von 63 (gemessen als 1 %ige Lösung in Tetrahydrofuran) und 200 Teile eines PVC-Maleinsäureäthylester-Copolymeren mit einem K-Wert von 59 (gemessen als 1 %ige Lösung in Tetrahydrofuran), sowie 70 000 Teile eines Gemisches aus gleichen Teilen von Tetrahydrofuran und 1,4-Dioxan eingegeben, wobei die Eingabe der angegebenen Bindemittel in Form ihrer gemeinsamen Lösung in dem genannten Lösemittelgemisch erfolgt. Die Gesamtmischung wird in der Kugelmühle 5 Tage angerieben, bis eine ausreichende Oberflächenglätte eines Abstriches einer Dispersionsprobe festgestellt wird. Die so erhaltene Magnetdispersion wird dann durch eine Cellulose-Asbestfaser-Filterschicht filtriert und anschließend mit einer geeigneten Beschichtungseinrichtung auf eine Polyäthylenterephthalat-Folie von 12 µm Stärke in einer solchen Auftragsstärke gegossen, daß nach Trocknung in einem Trockenkanal und anschließendem Glättvorgang mit Mehrstraßenkalander auf einem Rv-Wert der Schicht von 0,12 µm, gemessen mit einem Meßgerät der Firma Perthen, Hannover, eine Schichtdicke von 4,5 µm verbleibt. Im Bereich der noch nassen Schicht des Trockenkanals befinden sich dabei ein über die gesamte Breite der Magnetschicht reichender Magnet, welcher die Magnetteilchen in die gewünschte Vorzugsrichtung dreht. Die so hergestellten Magnetbänder werden in 3,81 mm Breite geschnitten.

Die entsprechenden Meßergebnisse an den einzelnen Magnetbändern sind in Tabelle 2 aufgeführt.

Tabelle 2

| Beispiel | Material von | $H_c$ [kA/m] | R [mT] | RF | Aussteuerbarkeit bei 1 KHz [dB] | bei 10 KHz [dB] | $K_d$ [dB] |
|---|---|---|---|---|---|---|---|
| A | Beispiel 2 | 28,9 | 167 | 2,68 | + 1,0 | 0 | + 2,0 |
| B | Beispiel 3 | 28,7 | 164 | 2,61 | + 0,8 | - 0,2 | + 2,5 |
| C | Beispiel 4 | 29,0 | 163 | 2,71 | + 1,2 | + 0,5 | + 0,5 |
| D | Vergleichsversuch 1 | 25,2 | 170 | 2,90 | + 0,8 | - 1,0 | - 0,5 |
| E | Vergleichsversuch 2 | 24,8 | 158 | 2,4 | + 0,5 | - 1,0 | 0 |
| F | Vergleichsversuch 3 | 25,3 | 161 | 2,3 | + 0,6 | - 0,6 | - 0,3 |
| G | Vergleichsversuch 4 | 24,1 | 160 | 2,5 | + 0,5 | - 0,7 | + 0,5 |
| H | Vergleichsversuch 5 | 22,9 | 150 | 2,2 | + 1,5 | - 2,8 | + 1,9 |
| I | Vergleichsversuch 6 | 29,3 | 178 | 2,9 | + 1,0 | + 0,8 | - 4,0 |
| Bezugsband T 308 S | | | | | + 1,5 | - 1,5 | 0 |

0014302

Patentansprüche

1. Verfahren zur Herstellung von hochkoerzitivem nadelförmigem Gamma-Eisen(III)oxid durch Reduktion von nadelförmigen unmagnetischen Eisen(III)oxiden oder -oxidhydroxiden bei Temperaturen zwischen 250 und 700°C mit einem überhitzten Dampfgemisch aus einer in diesem Temperaturbereich in Gegenwart von Eisenoxiden zersetzlichen organischen Verbindung und einem Inertgas zum Magnetit und anschließender Oxidation des Magnetits mit sauerstoffhaltigen Gasen bei 150 bis 450°C, dadurch gekennzeichnet, daß die eingesetzte organische Verbindung einen Fließpunkt von mindestens 250°C, eine Oberflächenspannung zwischen 27 und 30 dyn/cm, gemessen bei 90°C, und eine Dielektrizitätskonstante von 2,2 bis 2,6 aufweist.

2. Verfahren gemäß Anspruch 1, dadurch gekennzeichnet, daß sich die Verhältnisse der Volumina von organischer Verbindung zu Inertgas wie 1 zu $10^2$ bis $10^4$ verhalten.

3. Verfahren gemäß Anspruch 1, dadurch gekennzeichnet, daß die eingesetzte Menge an organischer Verbindung 0,5 bis 15 Gewichtsprozent, bezogen auf das unmagnetische Eisen(III)oxid oder -oxidhydroxid, beträgt.

# EUROPÄISCHER RECHERCHENBERICHT

**Europäisches Patentamt**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | DE - A - 2 064 804 (HI-CRYSTAL CO) <br> ✱ Seite 2, Absatz 5; Seite 3, Absatz 2; Seite 4, Absatz 1; Seite 7; Beispiel 1 ✱ <br><br> -- | 1 |
| | DE - C - 389 992 (EBLE) <br> ✱ Seite 1, Zeilen 1-16 ✱ <br><br> -- | 1 |
| DA | DE - C - 801 352 (BADISCHE ANILIN- & SODA-FABRIK) | |
| DA | US - A - 2 900 236 (SPEED et al.) | |
| DA | DE - B - 1 203 656 (GEORGIA KAOLIN) <br><br> CHEMICAL ABSTRACTS, Band 78, Nr. 10, 12. März 1973, Zusammenfassung Nr. 64303u, Seite 413, Columbus, Ohio, US, | |
| DA | & DL - A - 91 017 (FRISCHKORN) 05-07-1972 -- | |
| A | FR - A - 1 568 474 (CHAS.PFIZER & CO) | |
| D | & DE - B - 1 771 327 <br><br> -- | |
| A | US - A - 3 904 540 (BENNETCH et al) | |
| A | FR - A - 2 209 989 (KHALAFALLA et al) | |
| A | DE - E - 1 226 550 (ESSO) <br><br> ./. | |

### KLASSIFIKATION DER ANMELDUNG (Int.Cl. 3)

C 01 G 49/08
H 01 F 1/11

### RECHERCHIERTE SACHGEBIETE (Int. Cl. 3)

C 01 G 49/02
49/06
49/08
H 01 F 1/11
C 09 C 1/24

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 14-02-1980 | KERRES |

EPA form 1503.1 06.78

0014302
Nummer der Anmeldung

Europäisches
Patentamt

EUROPÄISCHER RECHERCHENBERICHT

EP 80 10 0005
-2-

| EINSCHLÄGIGE DOKUMENTE | | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| E | NL - A - 79 00945 (BASF) <br> ⁎ Seite 5, Zeilen 7-12 ⁎ <br> & FR - A - 2 416 868 <br> DE - A - 2 805 405 <br><br> ---- | 1 | |
| | | | RECHERCHIERTE SACHGEBIETE (Int. Cl. ³) |